# EUROPÄISCHE PATENTSCHRIFT

(11) **EP 1 325 493 B1**
(45) Veröffentlichungstag und Bekanntmachung des Hinweises auf die Patenterteilung: **01.06.2005**
(21) Anmeldenummer: 01986793.6
(22) Anmeldetag: 12.10.2001
(51) Int. Cl.: G10L 15/06, G10L 17/00

(54) **SPRACHGEFÜHRTES GERÄTESTEUERUNGSVERFAHREN MIT EINER OPTIMIERUNG FÜR EINEN BENUTZER**
VOICE-DRIVEN DEVICE CONTROL METHOD WITH AN OPTIMISATION FOR A USER
PROCEDE DE COMMANDE VOCALE D'APPAREIL PRESENTANT UNE OPTIMISATION POUR UN UTILISATEUR

(30) Priorität: 13.10.2000 DE 10050808
(43) Veröffentlichungstag der Anmeldung: 09.07.2003
(73) Patentinhaber: VoiceCom solutions GmbH, 90449 Nürnberg (DE)
(72) Erfinder: SCHIMMER, Klaus, 90513 Zirndorf (DE); PLANKENSTEINER, Peter, 91054 Erlangen (DE); HARBECK, Stefan, 91077 Kleinsendelbach (DE)
(74) Vertreter: Leonhard, Frank Reimund, Dipl.-Ing.
(86) Internationale Anmeldenummer: PCT/DE2001/003925
(87) Internationale Veröffentlichungsnummer: WO 2002/031813

(56) Entgegenhaltungen:
- EP-A- 0 586 996
- DE-A- 4 325 096
- JP-A- 2000 194 386
- US-A- 5 835 890
- US-A- 5 895 447
- US-A- 6 073 101
- US-A- 6 088 669
- US-A- 6 122 613

## Beschreibung

Die Erfindung befaßt sich mit einem Verfahren zum Betreiben einer Steuerungseinrichtung, die sprachgesteuert ist. Die Erfindung befaßt sich auch mit einem Verfahren zur Vorbereitung, also zur Einrichtung (Anpassen) einer solchen Steuerungseinrichtung, um sprachgesteuert arbeiten zu können. Ebenfalls betroffen ist ein Verfahren zur Steuerung der Steuerungseinrichtung, um an unterschiedliche Sprachsignale (Audiosignale) besser angepaßt zu werden. Sinngemäß ist das Betreiben übergeordnet, umfaßt also sowohl die Vorbereitung, wie auch die Anpassung während eines Betriebes und umschreibt als solches den Betrieb einer sprachgesteuerten Steuerungseinrichtung, dabei sind Vorbereitung und Anpassung einzelne Funktionen oder Betriebsweisen innerhalb der globalen Gesamtbetriebsweise.

Vorgelagert werden soll eine begriffliche Festlegung, um das Verständnis zu erleichtern. Soweit von einem Audiosignal oder einem Sprachsignal die Rede ist, ist dieses Sprachsignal nicht zwingend ein unmittelbar gesprochenes Wort, das sich nach Aufnahme über eine Erfassungseinrichtung, wie ein Mikrophon, als elektrisches Signal darstellt. Ebenso sind Sprachsignale auch off-line zur Steuerung einsetzbar, wenn sie als eine Datei zur Verfügung gestellt werden oder über Netzwerke zunächst übermittelt werden, bevor sie zur Steuerung verwendet werden. Das Sprachsignal im weiterhin verwendeten Sinne umfaßt also nicht nur die unmittelbare Sprache, sondern generell das aus ihr in irgendeiner Weise folgende Signal, auch nach einer Zwischenspeicherung oder einer Zwischenübertragung. So gesehen kann das Sprachsignal als zeitabhängiges Signal vorliegen, wie auch als ein Frequenzspektrum. Es enthält eine Information, die der Sprecher, also der Autor des Sprachsignals, vermitteln will. Dieser erste Bedeutungsgehalt des Audiosignals soll erfaßt werden und soll dem Gerät zugeordnet werden, um eine Funktion dieses Gerätes als "Action" anzusprechen.

Der Sprecher ist der Urheber des Audiosignals. Er muß dem Erkennungssystem nicht bekannt sein, er muß auch dem Vorbereitungsverfahren, Betriebsverfahren oder Anpassungsverfahren nicht unbedingt bekannt sein. Das System bereitet dann die Erkennung des Bedeutungsgehaltes vor, indem eine Vorbereitung durchgeführt wird.

Ist der Sprecher bekannt oder zumindest hinsichtlich objektiver Kriterien im Rahmen einer Gruppe (im Sinne eines objektivierten Kreises von Personen) eingrenzbar, so kann das System eine eingeschränkte Anpassung erfahren. Der Betrieb findet dann mit dem angepaßten System oder mit dem vorbereiteten System statt. Ist der Sprecher genauer konkretisierbar, liegt er als individuelle Person bereits in der Systemspeicherung vor, so kann das System unmittelbar auf ihn angepaßt werden.

Soweit ein "Sprecher" genannt wird, ist eigentlich "sein Sprachsignal" oder das entsprechende Audiosignal gemeint. Diese beiden Begriffe werden synonym verwendet; das System arbeitet nicht mit einer optischen Erkennung des Sprechers, sondern mit einer Erkennung der akustischen Signale, die auf den Sprecher als Urheber zurückzuführen sind.

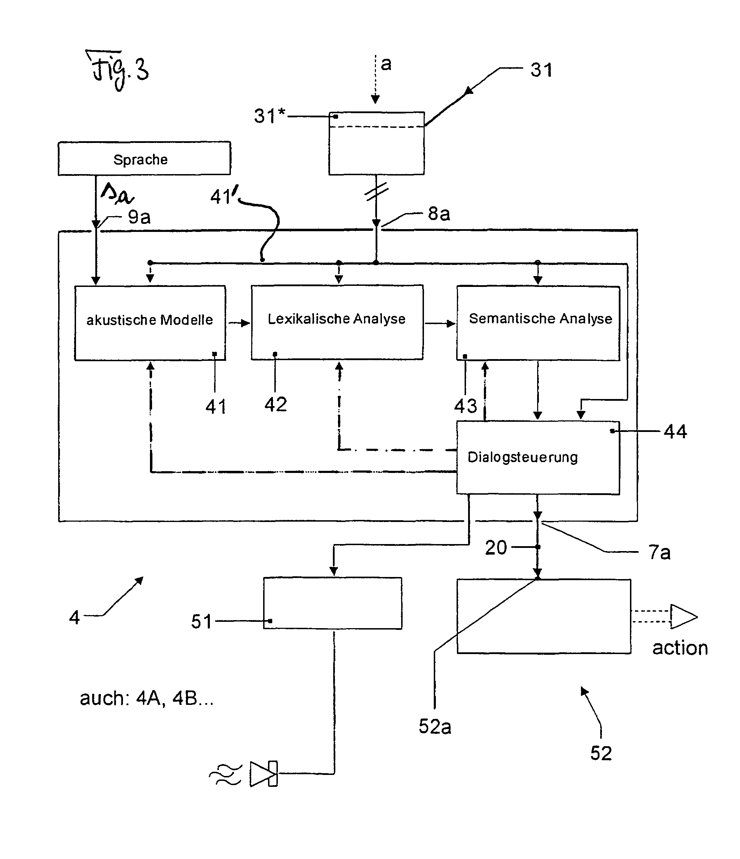

Aus dem Stand der Technik sind Telefonanlagen mit Sprachsteuerung bekannt, von denen einige erläutert werden sollen. Aus **US-A 5,917,891** (Will) wird vorgeschlagen, das Anrufverhalten eines Benutzers zu verwenden, das aus einer Historie seines Anrufverhaltens hergeleitet ist und im Rahmen eines neuronalen Netzwerkes ergänzende Verwendung findet (vgl. dort Figur 3). Ein solches Modell (dort 320) wird mit bestimmten Wochentagen und Zeiten gespeist, um Wahrscheinlichkeiten einer gewünschten Telefonnummer zu ermitteln. Mit dieser stochastischen Vorbereitung wird eine Spracherkennung kombiniert (dort 330), wofür ein "Integrator" (dort 350) Verwendung findet. Hierbei geht es nur um die Erkennung von Telefonnummern, die ggf. zuvor rückgefragt werden, bevor sie tatsächlich gewählt werden, vgl. dort Spalte 7, Zeile 11 bis 56, insbesondere Zeilen 54 bis 56. Die dort beschriebene Spracherkennung (dort 330) wird als entweder sprecher-unabhängig oder sprecher-abhängig beschrieben, wobei eine gewisse Anpassung dieser Spracherkennung an den Sprecher erfolgen kann, wenn er als solcher gespeichert ist (Spalte 7, Zeile 28 bis 33).

Eine alternative Struktur eines Telefonbuchs findet sich in **US-A 5,832,063** (Vysotsky). Es wird dort eine Mischung aus sprecher-abhängigem Erkennungssystem und sprecherunabhängigem Erkennungssystem vorgeschlagen, wobei ggf. ein Schiedsrichter (dort 406, 254) eine Entscheidung fällen muß, ob eine Telefonnummer gewählt worden ist oder ein Steuersignal (im Sinne eines Command-Wortes) gewünscht war. Es ist die Sprecher-Abhängigkeit bei der Wahl der Telefonnummern vorgesehen, und die Sprecher-Unabhängigkeit bei der Wahl der Kommandos.

Eine noch weitere Sprachsteuerung findet sich in der **WO-A 95/28790** (Northern Telecom), wo eine Veränderung der HMM dadurch erfolgt, daß sie abhängig von der durch Sprache angesprochenen und freigegebenen Telefonnummer gemacht werden (vgl. dort Anspruch 1 und Seite 6, zweiter Absatz). Schließlich ist aus der **US 5,995,929** (Gupta) eine Spracherkennung zur Steuerung einer Telefonanlage bekannt, bei welcher die Wahrscheinlichkeit von Bereichen aufgrund eines Anrufmusters eingestellt werden.

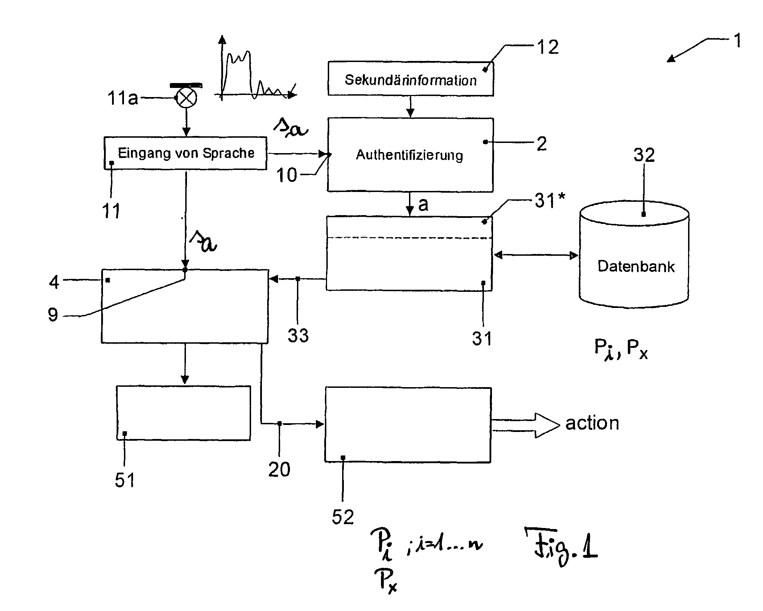

**US-A 6,088,669 (Maes, IBM)** beschreibt eine akustische und lexikalische Analyse (nach Wortschatz und Satzbau) in der dortigen Spalte 9, Zeile 44 ff (dortiger Anspruch 4) und Spalte 2, Zeilen 15 bis 36. Dazuhin ist auch ein "User Feedback" 340 beschrieben, vgl. dazu dortige Figur 1, Figur 3 und die zugehörige Beschreibung in dortiger Spalte 6 ab Zeile 10. Die Identität des Sprechers wird dem Benutzer kenntlich gemacht, z.B. durch ein Display, durch eine Ansage oder als eine Grußmitteilung. Es wird damit beabsichtigt, eine Korrektur der getroffenen Auswahl vorzunehmen, also eine Korrektur des gewählten und geladenen Profils vorzunehmen. Aus dieser Passage geht eine Rückfrage hervor, also ein Dialog, welcher der Erkennungsumgebung beigegeben ist. Ein Speaker-dependent HMM (= Modell oder Profil) wird nach Identifizierung des Sprechers geladen, vgl. dort Spalte 4, Zeilen 42 bis 57. Vergleichbar ist auch **US-A 6,073,101** (Maes), mit einer gleichen Schaltung nach dortigen Figuren 1 gemäß der vorgenannten Fundstelle. Alternativ noch **US-A 5,895,447** (Ittycheria, IBM) mit Auswahl und Laden eines Speaker-dependent Modells.

**DD 218 969 (Affa)** zeigt vergleichbar den vorigen Schriften eine Spracherkennung, ohne eine Bedeutungserkennung oder eine Sinnerkennung der gesprochenen Sprache. Es sind Sprechergruppen erwähnt, die aufgrund ähnlicher akustischer Eigenschaften getroffen (gebildet) werden und damit als ein erster Schritt von einer sprecherabhängigen zu einer sprecher-unabhängigen Spracherkennung anzusehen sind.

**Aufgabe der Erfindung** ist die Schaffung eines sich zuverlässig an einen Benutzer anpassenden Systems zur sprachgeführten Steuerung einer technischen Einrichtung (eines technischen Geräts), die beispielsweise eine Telefonanlage sein kann.

Gelöst wird diese Aufgabe mit dem Arbeitsverfahren nach Anspruch 1. Auch Anspruch 4 erfüllt diesen Zweck.

Es erfolgt zunächst eine Sprechererkennung. Diese Erkennung läuft darauf hinaus, einen individuellen Sprecher zu erkennen, der mit einem bestimmten Profil in einer Datenbank bereits verfügbar ist. Die Sprechererkennung kann aber auch eine Gruppe (einen Kreis von Personen) identifizieren, die ebenfalls mit einem - allgemeineren, aber schon individualisierten - Profil in der Datenbank verfügbar sind. Diese objektivierte Gruppe umschreibt eine Vielzahl von Sprechern, die aufgrund von objektiven Kriterien dieser Gruppe zugeordnet werden können. Beispiele sind bestimmte Dialekte oder Landessprachen. Weitere Beispiele sind bestimmte psychometrische Eigenschaften. Ebenfalls weitere Möglichkeiten sind Wortschatzeigenschaften im Sinne der Wahl bevorzugter Worte. Schließlich können Satzbaueigenschaften ein objektiviertes Kriterium für eine Sprechergruppe sein. Maßgebend ist dafür aber jeweils das Audiosignal, das entweder dem Individuum oder der objektivierten Gruppe (von Individuen) zugeordnet wird.

Eine Zuordnung im Sinne einer Authentifizierung muß nicht allein aufgrund eines Abschnitts des Audiosignals erfolgen, es kann auch durch Sekundärindizien zu einer solchen Authentifizierung kommen. Dabei kann aktives Zutun ebenso beteiligt sein, wie Begleitumstände, die eine Authentifizierung erlauben.

Liegt ein Individuum als spezifischer Autor eines vorliegenden (aktuellen) Audiosignals vor, wird ein diesem zugeordnetes Profil ausgewählt. Gleiches gilt für den Fall, daß eine objektivierte Gruppe von Sprechern festgelegt werden konnte, der dann ein anderes Profil zugeordnet werden kann, welches ausgewählt wird. Es versteht sich, daß das Profil, das einer objektivierten Gruppe zugeordnet werden kann, allgemeiner ist als ein Profil, das einem spezifischen Individuum als Sprecher zugeordnet werden kann.

Nach Auswahl des Profils wird dieses Profil, das mehrere Parameter einer Spracherkennung im Sinne einer Bedeutungserkennung umfaßt, in eine erste Erkennungsumgebung geladen, die dazu dient, den ersten Bedeutungsgehalt des Audiosignals zu ermitteln. Mit diesem Laden oder Einbinden, welche Begriffe sinngemäß dieselbe Bedeutung haben, wird die Erkennungsumgebung angepaßt oder vorbereitet. Man kann auch von einer Konfiguration durch Parameter sprechen, die von dem Profil in der Erkennungsumgebung vorgegeben werden. Mit einer solchen-Vorgabe (in Sinne einer Vorbereitung oder Anpassung) ist anschließend ein Betrieb der sprachgesteuerten Steuerungseinrichtung zur Bedienung eines technischen Gerätes möglich, das aufgrund des ermittelten Bedeutungsinhaltes des Sprachsignals angesteuert wird. Als Folge der Ansteuerung führt das technische Gerät eine Aktion durch, die in beispielsweise der Bereitstellung oder Wählen einer Telefonnummer, dem Auslösen einer akustischen Rückfrage im Sinne eines Dialoges oder der Schaltung einer Konferenz mit mehreren Teilnehmern besteht. Solche Funktionen sind abhängig von dem Typ des "angesprochenen" Gerätes, das von einer Telefonanlage bis hin zu anderen steuerbaren Geräten vom Wesen her jedes technische Gerät sein kann.

Die Steuerung des technischen Gerätes erfolgt durch die Erkennung des Bedeutungsgehaltes des Audiosignals, das eine oder mehrere Funktionen des Gerätes gleichzeitig oder nacheinander in vorgegebener Reihenfolge auslösen kann. Eine Aufteilung des Sprachsignals in einen zeitlichen Abschnitt für die Erkennung von Einträgen und in einen zweiten Abschnitt für die Erkennung von Schlüsselworten ist nicht erforderlich.

In dem beschriebenen technischen Gerät, welches mit dem Verfahren arbeitet, sind zumindest zwei, bevorzugt mehrere Pfade ausgebildet, die gemäß den Merkmalen (b) und (c) des Anspruchs 4 oder 1 gestaltet sind. Jeder dieser Pfade ist als eine Funktionslinie beschrieben, die eine jeweils eigene Erkennungsumgebung besitzt. Jeder der Erkennungsumgebungen wird das Sprachsignal identisch zugeführt. Vorgelagert ist nur eine Authentifizierung für alle Erkennungsumgebungen, der dasselbe Sprachsignal zugeführt wird. Abhängig von ihrem hier mehrdimensionalen Ausgangssignal werden den mehreren Erkennungsumgebungen unterschiedliche Profile vorgegeben, die alle dem Sprachsignal zuordnungsfähig erscheinen, nachdem keine eindeutige Festlegung erfolgen kann. Jede Linie arbeitet gesondert, besitzt eine gesonderte Anpassung durch Auswahl und Zuordnung eines eigenen Profils für die jeweils gesonderte Erkennungsumgebung.

Die Entscheidungseinrichtung (Anspruch 1) erhält die Ergebnisse der zumindest zwei Erkennungsumgebungen, um auszuwählen, welches Erkennungsergebnis dem technischen Gerät zu Steuerungszwecken zugeführt wird. Beispielsweise kann aufgrund einer Schwellenentscheidung eine Bedeutung bevorzugt werden, z.B. durch eine Strahlsuche (eine Suche, die die Bedeutungsinhalte der Erkennungslinien unterdrückt, deren Bewertung unter einer Schwelle liegt). Eine alternative Vorgehensweise ist die Bereitstellung einer ungeraden Zahl von Erkennungslinien (jeweils gesonderte Profilauswahl und Erkennungsumgebung), um die Mehrheit entscheiden zu lassen, welche Bedeutung dem technischen Gerät zur Ausführung weitergegeben wird (Anspruch 2).

Gemäß der Erfindung kann auch eine Dialogsteuerung vorgesehen sein. Zumindest ein Parameter eines geladenen Profils beeinflußt die Eigenschaft der Dialogsteuerung (Anspruch 17). Die Ausgabe der Dialogsteuerung erfolgt optisch oder akustisch. Diese Dialogsteuerung arbeitet über eine optische oder akustische Rückkopplung und/oder über eine Rückkopplung innerhalb der Erkennungsumgebung. Eine Rückkopplung über ein Signal, hin zum insoweit tatsächlich erreichbaren Sprecher, führt zu einer Aufforderung des Systems z.B. dann, wenn die Bedeutung des vorliegenden akustischen Signals nicht eindeutig erfaßt werden kann oder zuvor ein individuelles Profil nicht zugeordnet werden kann.

Die optische (am Display) oder akustische Rückkopplung der Dialogsteuerung ist bevorzugt orientiert an der Geübtheit des Benutzers. Ist das Profil, das ausgewählt und geladen worden ist, kennzeichnend für einen erfahrenen Benutzer, sind die Rückkopplungen über die akustisch oder optisch sich äußernden Signale schlicht und kurz. Bei geladenem Profil eines ungeübten Benutzers oder bei mehrfachen Fehlern wird die Dialogsteuerung so beeinflußt, daß die Informationsfülle der Rückkopplung vergrößert oder intensiviert wird.

Im geladenen Profil können hinsichtlich der Dialogsteuerung bestimmte Typen vorgegeben sein, die im Sinne von Begriffspaaren (Kooperativität, unkooperativ oder technischer Laie, Systemverständnis) definiert sein können (Anspruch 21).

Die beschriebene Gruppe von Personen (Anspruch 4, 1) kann aufgrund objektivierter Kriterien festgelegt sein. Diese objektiven Kriterien sind erfaßbare Eigenschaften. Auch lokale "Eigenschaften" im Sinne einer örtlichen Befindlichkeit können verwendet werden, beispielsweise wird eine Gruppe von Personen definiert, die in einem bestimmten Stockwerk eines Gebäudes oder in einem bestimmten Raum eines Hauses sitzt, um von dort zu telefonieren, was schon aufgrund von Nebenstellenanschlüssen als Sekundärindizien zur Authentifizierung führen kann. Hörbare Eigenschaften sind Spracheigenschaften im Sinne von beispielsweise Dialekt oder Fremdsprache.

Findet das Verfahren kein zugeordnetes Profil für einen individuellen Sprecher oder für eine objektivierte Gruppe, wird von einem Standardprofil ausgegangen (Anspruch 5). Dieses Standardprofil enthält in sehr allgemeiner Weise spezifische Kriterien für die Einstellung der Erkennungsumgebung, die weiter unten beschrieben werden. Das Standardprofil kann während des zeitlichen Ablaufs des Analogsignals verändert werden, um zu einem individuellen Profil zu werden. Nach Veränderung wird dieses Profil als ein verfügbares Profil in einer Datenbank abgelegt (Anspruch 6).

Die Veränderung des Profils kann die Veränderung des mit dem Profil verfügbar gemachten Wortschatzes betreffen (Anspruch 21). Alternativ oder kumulativ kann auch eine Dialogausgabe in ihrer Eigenschaft verändert werden, um sich auf den durch das Profil repräsentierten Benutzer einzustellen und die Dialogausgabe in optischer oder akustischer Form auf das Wissen oder die Fähigkeit des Benutzers einzustellen. Eine weitere Möglichkeit der Änderung des Standard-Profils zum individuellen Profil ist die Vorgabe von Parametern zur Beeinflussung der Wortfolgeerkennung in der Erkennungsumgebung. Hier kann die Anzahl der zur Erkennung zugelassenen Wortfolgen verändert werden, wobei damit sowohl eine Reduzierung, wie auch eine Verlagerung, wie auch eine Erweiterung gemeint ist.

Eine Rückkopplung durch eine akustische oder optische Signalisierung im Sinne einer Dialogaufforderung kann auch dazu verwendet werden, die Erkennungsumgebung umzustellen, orientiert an den erwarteten Eingaben eines Benutzers (Anspruch 23). Hier kann die Wortfolgeerkennung eingeschränkt werden, um nur noch ganz spezifische Wortfolgen zur Wortfolgeerkennung zuzulassen, insbesondere kann eine Art wiederholte Authentifizierung erfolgen, wenn ein erster Authentifizierungsversuch gescheitert ist und dazu führte, daß ein Standard-Profil in die Erkennungsumgebung eingebunden wurde (Anspruch 23). Schließlich kann mit einer zum Dialog auffordernden Signalisierung ein Wechsel des derzeit in der Erkennungsumgebung eingebundenen (oder geladenen) Profils vorbereitet oder veranlaßt werden (Anspruch 22), wobei anzumerken ist, daß die eigentliche Eingabe des Benutzers hier nicht von der Erfindung umfaßt ist, sondern allein die Signalisierung und die Vorbereitung zur Entgegennahme einer Eingabe zur Erreichung des technischen Effekts der Anpassung an einen Benutzer genügt.

Aufgrund von Sekundärindizien kann eine Vorauswahl von auszuwählenden Profilen getroffen werden (Anspruch 30). Diese reduzierte Anzahl von verfügbar gemachten Profilen senkt die Wahrscheinlichkeit, daß falsche Profile ausgewählt werden, und erhöht die Geschwindigkeit der Auswahl eines Profils durch die Authentifizierung. Neben statistischen Möglichkeiten können auch die erwähnten Sekundärinformationen zu einer zunächst durchzuführenden Reduzierung des Umfangs der Profile führen, die überhaupt in die engere Auswahl gezogen werden. Ein Beispiel liegt darin, daß eine Nebenstelle nicht zwingend nur von einem Benutzer verwendet wird, sondern mehrere Benutzer in Frage kommen, die diese Nebenstelle verwenden.

Abhängig von dem zugeordneten und in die Erkennungsumgebung geladenen Profil kann die Steuerungstiefe der Steuerung angepaßt werden. Damit ist gemeint, daß die Reichweite der Steuerungsmöglichkeiten verändert werden kann, abhängig von dem Individuum oder der objektivierten Gruppe. Bestimmte Telefonbucheinträge können bei Anwendung einer Telefonanlage zusätzlich verfügbar gemacht werden, wenn in der Hierarchie höher stehenden Personen authentifiziert werden. Bei Erkennung von unerfahrenen Personen, die auch als ein Profil in der Datenbank im Sinne eines Kreises von Personen verfügbar sind, können nur ganz begrenzte technische Möglichkeiten zur Steuerung des technischen Gerätes verfügbar sein, die beispielsweise wenig komplex sind. Zur Reduzierung der Reichweite der Steuerungsmöglichkeiten (im Sinne der Steuerungstiefe) werden weniger Schlüsselworte aktiv geschaltet, wenn sie in der Bedeutungserkennung der Erkennungsumgebung erkannt werden und dem technischen Gerät zur Ausführung übergeben werden.

Abhängig von der Authentifizierung kann weiterhin auch ein Bedeutungswandel erfolgen (Anspruch 9, Anspruch 12). Von einer bestimmten Nebenstelle - bei Anwendung auf eine Telefonanlage - kann der Bedeutungswandel den Begriff "mein Chef" erfassen. Abhängig von der Authentifizierung und dem gewählten Profil, das in die Erkennungsumgebung geladen ist, bekommt das Wort "mein" eine unterschiedliche Bedeutung. Entsprechend der durch die "semantische Analyse" gewandelten Bedeutung wird das "technische Gerät" gesteuert.

Die semantische Analyse wird durch zumindest einen weiteren Parameter des eingebundenen Profils beeinflußt.

Die Wortfolgeerkennung, die der semantischen Analyse vorgelagert ist, ist als lexikalische Analyse abhängig vom durch das Profil bestimmten Wortschatz und Satzbau (Syntax). Der Wortschatz wird von einer jeweiligen Stelle im Satz (als Folge von mehreren Worten) abhängig, d.h. an bestimmten Stellen in einem Satz werden nur bestimmte Worte zugelassen und damit erkannt (Anspruch 28). Nachdem die für den Erkennungsprozeß zugelassenen Wortfolgen, ggf. auch die zum Dialog auffordernden Signalisierungen, durch das Profil veränderbar sind, paßt sich die Erkennungsumgebung an eine beliebige Vielzahl von Benutzern an, sei es durch Auswählen, Zuordnen und Einbinden eines einem schon bekannten Benutzer zugeordneten individualisierten Profils, dessen weitere individualisierung und erneute Abspeicherung, oder sei durch Definition von neuen individuellen Profilen, deren Ausgangspunkt sowohl ein Standard-Profil wie auch solche Profile sein können, die auf die objektivierten Gruppen hin angepaßt sind, welche auch als eine Art individualisierte Profile anzusehen sind, die aber nicht so stark individualisiert sind, wie die einzelnen Sprechern zugeordneten Profile. Alle Profile sind in einer Datenbank verfügbar, wobei eine zweite Datenbank vorgesehen sein kann, die der Erkennung und Zuordnung (im Rahmen der Authentifizierung) zugewiesen ist, um die in der ersten Datenbank verfügbaren Einträge den authentifizierten Benutzern zuzuordnen.

Wird eine neue Benutzergruppe angelegt oder ein neues individualisiertes Profil für einen Benutzer in der Erkennungsumgebung erstellt und anschließend in der ersten Datenbank abgespeichert, erfolgt auch eine Eintragsänderung oder -ergänzung in der zweiten Datenbank, zur Ermöglichung der Zuordnung für spätere akustische Signale, die von dem neuen Benutzer stammen.

Eine Wortfolgeerkennung (Anspruch 10) besitzt auch einen ihr zugänglichen Wortschatz, der durch das Profil vorgegeben wird. Die Wortfolgeerkennung kann mit einer Syntaxerkennung ergänzt sein (Anspruch 11).

Zur Verbesserung des akustischen Modells kann eine Anpassung dieses Modells abhängig von der Art der Übertragung des Sprachsignals oder von der Art der Aufnahme des Sprachsignals erfolgen (Anspruch 27).

Ein Profil kann Parameter für eine semantische Analyse und/oder eine lexikalische Analyse umfassen. Es können Parameter für ein akustisches Modell noch hinzutreten. Die lexikalische Analyse besteht aus Wortschatz und Satzbau (Syntax, Aufbau des Satzes als Teil der Grammatik). Die semantische Analyse betrifft die Bedeutung von Worten (als Zeichenfolgen), auch die Bedeutung von Wortfolgen, bis hin zum Inhalt eines ganzen Satzes. Bevorzugt ist die Reihenfolge, ein akustisches Modell vorzulagern, eine lexikalische Analyse folgen zu lassen und eine semantische Analyse hinzuzunehmen (Anspruch 12). Jede dieser drei Funktionsblöcke innerhalb einer Erkennungsumgebung wird von Parametern eines Profils beeinflußt. Unter einer lexikalischen Analyse ist auch ein Wortschatz zu verstehen, der durch das ausgewählte und in die Erkennungsumgebung geladene Profil bestimmt wird. Er kann aus einem vorgegebenen Anteil und einem auf den Benutzer oder die Benutzergruppe zugeschnittenen Anteil bestehen.

Bei der semantischen Analyse (im Sinne der Adaption der Grammatik) kann der Bedeutungswandel erfolgen (Anspruch 9). Die Abhängigkeit ergibt sich über die Authentifizierung in das ausgewählte Profil, das hinsichtlich der die Semantik betreffenden Parameter auf die Erkennungsumgebung Einfluß nimmt.

Ausführungsbeispiele erläutern und ergänzen die Erfindung.
- **Figur 1**: ist ein schematisches Funktionsbild einer Steuerungseinrichtung zur Steuerung des technischen Gerätes 52, das im Beispiel als Telefonanlage ausgestaltet sein kann.
- **Figur 2**: ist eine Steuerungseinrichtung 1a, bei der jeweils eine Profilauswahl 31A und eine Erkennungsumgebung 4A einen Erkennungspfad bildet, von denen mehrere parallel geschaltet sind.
- **Figur 3**: veranschaulicht den inneren Aufbau einer Erkennungsumgebung 4, angesteuert von einem Sprachsignal sₐ und beeinflußt (vorbereitet, konfiguriert oder angepaßt) von einer Profilauswahl 31.

Beschrieben werden soll das Verfahren zum Vorbereiten, Betreiben und Anpassen einer sprachgesteuerten Steuerungseinrichtung zur Bedienung eines technischen Gerätes anhand einer Telefonanlage, die als Gerät 52 vorstellbar ist, das gemäß Figur 1 Befehle über die Steuerungsleitung 20 erhält und in technische Funktionen umsetzt, die als "Action" bezeichnet sind. Solche technischen Funktionen können das Wählen einer Telefonnummer, das Einleiten einer Konferenzschaltung, das Sperren eines Zugangs, das Umschalten auf ein anderes Telefon oder sonstige Funktionen sein, die von heutigen Telefonanlagen in einer Großzahl angeboten werden, allerdings jeweils wenig komfortabel gesteuert über Knopfdruck-Sequenzen oder Sondertasten.

Die Sprachsteuerung bietet eine große Flexibilität, eine leichte Bedienbarkeit und eine hohe Funktionalität. Ein Leistungskriterium bei der Spracherkennung ist in erster Linie die Erkennungssicherheit. Sie wird geringer, wenn die Sprecher variieren, also eine Erkennung unabhängig vom Sprecher bereitgestellt werden soll. Daneben ist Erkennungsgeschwindigkeit ein wichtiges Kriterium. Sie hängt von der Komplexität der zugelassenen Wortfolgen ab. Je weniger Wortfolgen berücksichtigt werden müssen, desto schneller die Erkennung, aber vor allem desto höher die Erkennungssicherheit. Ein Einflußkriterium auf die Dauer und die Sicherheit der Erkennung ist der Wortschatz und die grammatikalische Komplexität (= Perplexität) des Sprachsignals. Geht man deshalb von freiem Dialog mit kontinuierlicher Sprache aus und möchte jeden Sprecher zulassen, so muß das System Sicherheit mit Geschwindigkeit paaren, bei gleichzeitig komplexer Steuerungsmöglichkeit des technischen Gerätes. Gegen eine drastische Reduzierung der zugelassenen Wortfolgen spricht aber, daß die Äußerung für eine erfolgreiche Erkennung natürlich auch dabei sein muß, um auch benutzerspezifische Wortfolgen erkennen zu können.

Als eine Linie, mit der die Erkennungsumgebung der Figur 3 skizzierbar ist, ist die Reihenfolge aus einem digitalen Sprachsignal, einer Berechnung der akustischen Merkmale des Sprachsignals, die Bestimmung der besten Wortfolge durch akustisches und syntaktisches Wissen sowie die semantische Analyse der Wortfolge anzugeben. Die semantische Analyse ergibt die Bedeutungserkennung, also den Inhalt des Sprachsignals, das über die Steuerleitung 20 eine Aktion des Gerätes 52 bewirkt.

Eine Dialogstruktur durch Ausgabe eines rückkoppelnden Sprachsignals 51 zum Sprecher kann zusätzlich vorgesehen sein. Sie folgt gewissen Strategien, die weiter unten erläutert werden sollen.

Ausgangspunkt für die Erkennung des Bedeutungsgehaltes eines Sprachsignals ist das Signal selbst. Dieses Signal sₐ wird der Steuerungseinrichtung 1 an zwei Stellen zugeführt, einem Eingang 9 der Erkennungsumgebung 4 und an einem Eingang 10 der Authentifizierung 2. Das Signal wird von einem Eingang oder einer solchen Schaltung 11 bereitgestellt, der entweder ein Mikrophon 11a oder ein digital oder analog gespeichertes Signal oder ein über ein Netz übertragenes Signal, bei nicht anwesendem Sprecher, vorgelagert ist. Der Authentifizierung 2 wird Sekundärinformation 12 zugeführt. Die Schaltung zur Authentifizierung gibt ein Ausgangssignal "a" ab, mit dem ein Profil ausgewählt wird, was in einer Auswahlschaltung 31 mit Zuordnungssektion 31 * erfolgt, die Zugriff auf eine Datenbank 32 besitzt, in der eine Vielzahl von Profilen Pᵢ abgelegt sind.

Mit der Profilauswahl 31 wird ein ausgewähltes Profil Pᵢ, wobei i = 1... n, in die Erkennungsumgebung 4 geladen oder eingebunden. Das Einbinden oder Laden ist so zu verstehen, daß bestimmte Parameter der in der Erkennungsumgebung vorhandenen Funktionselemente verändert werden. Das eingebundene Profil ist mit 33 bezeichnet, es ist ein Element der gespeicherten individualisierten Profile Pᵢ. Ein weiteres gespeichertes Profil ist das Standard-Profil Pₓ, das weiter unten erläutert wird.

Die Funktion der Authentifizierung und der Auswahlschaltung 31 mit Zuordnungssektion 31 * kann zusammengefaßt werden. Die Zuordnung kann über eine zweite Datenbank geschehen, die auch als Teil der ersten Datenbank 32 angesehen werden kann. Die Authentifizierung kennzeichnet einen Benutzer oder eine objektivierte Gruppe von Benutzern, um zugehörig ein Profil aus der Haupt-Datenbank 32 zu entnehmen, welche Zuordnung über die Hilfs-Datenbank 31* erfolgt. Das ausgewählte Profil 33 wird in die Erkennungsumgebung 4 geladen.

Der Erkennungsumgebung wird das Sprachsignal sₐ über den genannten Eingang 9 auch zugeführt, so daß es mit den eingestellten Parametern des Profils 33 bearbeitet werden kann. Eine Darstellung des inneren Aufbaus der Erkennungsumgebung ist in Figur 3 gezeigt und wird später erläutert.

Aus der Erkennungsumgebung folgt ein Signal 20, welches das technische Gerät 52 steuert.

Die Erkennungsumgebung arbeitet zusammen mit einer Dialogsteuerung, die eine Signalausgabe 51 einsetzt. Diese Display- oder Sprachausgabe 51 ist nur dann sinnvoll, wenn das Signal in angemessenem zeitlichen Rahmen einen Benutzer erreicht. Über die Dialogsteuerung wird eine Signalausgabe erzeugt, die an den Sprecher zurückgekoppelt werden kann, was auch über eine große Entfernung oder über ein Netzwerk und auch zeitlich versetzt möglich ist. Bei Telefonanlagen ist die Erreichbarkeit durch Rückkopplung unmittelbar ersichtlich, das Dialogsignal wird in die Hörerleitung direkt eingeblendet, während das Mikrophon als Quelle für das bearbeitete Signal sₐ dient. Gleiches kann auch auf optischem Wege durch ein Display erfolgen.

Ein Benutzer, der ein akustisches Signal zum Mikrophon 11a gibt, spricht die Authentifizierung 2 an. Die Authentifizierung bestimmt den Sprecher. Sie versucht zunächst, aufgrund des gesprochenen Wortes eine Zuordnung zu finden, ob ein in der Datenbank 32 verfügbares individuelles Profil zu dem Sprachsignal sₐ am Eingang 10 zugeordnet werden kann. Sekundärinformationen können stützend oder alleinig herangezogen werden, beispielsweise als Nebenstelleninformation, die angibt, welcher Benutzer das Sprachsignal abgibt. Der Benutzer kann sich auch aktiv selbst authentifizieren, was über eine Dialogsteuerung mit Sprachausgabe 51 möglich ist. Steht kein spezielles Profil in der Datenbank 32 zur Verfügung, das von der Zuordnung 2,31,31* eindeutig zugeordnet werden kann, wird das Standard-Profil Pₓ verwendet. Kann anhand des Sprachsignals, anhand der Sekundärinformation oder anhand von Eigenidentifizierung eine Zuordnung zu einem Kreis von Personen erfolgen, für den ein gespeichertes Profil zur Verfügung steht, wird dieses Profil als gruppenspezifisches Profil, betreffend eine Gruppe von Personen, ausgewählt. Das ausgewählte Profil 33 wird in die Erkennungsumgebung 4 geladen und beeinflußt hierbei die an Figur 3 näher zu beschreibenden Parameter. Bei der Durchführung der Spracherkennung in der Erkennungsumgebung 4 ist durch das ausgewählte Profil vorgegeben, wie die Erkennung erfolgen soll und welche Parameter dazu in den akustischen Modellen, bei dem Wortschatz anhand von geladenem Wortschatz (Wörterbüchern) und in der semantischen Analyse Anwendung finden.

Das Standard-Profil Pₓ kann dann, wenn es in die Erkennungsumgebung 4 geladen ist, modifiziert werden. Das Standard-Profil Pₓ bleibt dabei in der Datenbank 32 unverändert, nur das Abbild wird in der Erkennungsumgebung geändert, um nach der Änderung als ein individualisierteres Profil Pᵢ neu abgespeichert zu werden. Die Veränderung kann dabei alle Bereiche der Parameter erfassen, die an der Profilumgebung näher erläutert werden, so Parameter für die akustischen Modelle, Parameter für die lexikalische Analyse (Wortschatz und Syntax) sowie Parameter für die semantische Analyse (Bedeutungswandel). Weitere Parameter für die Anpassung der Dialogsteuerung können ebenfalls verändert werden. Das Rückspeichern eines erzeugten neuen individuellen Profils in die Datenbank 32 sorgt auch für eine Anpassung der Einträge in der Hilfs-Datenbank 31*, so daß die Authentifizierung 2 in Verbindung mit der Zuordnung 31 eine Auswahl auch zukünftig vornehmen kann, wenn der Benutzer später erneut auftritt.

Wird in der Erkennungsumgebung ein schon vorhandenes individuelles Profil weiter individualisiert, ergänzt, erweitert oder geändert, so wird dieses Profil an den ursprünglichen Platz in der Datenbank zurückgespeichert und die Hilfs-Datenbank 31 * als Zuordnungssektion nicht erneut aktualisiert.

Die **Figur 3** veranschaulicht den inneren Aufbau der Erkennungsumgebung 4. Das Sprachsignal sₐ wird dem Eingang 9a zugeführt. Das ausgewählte Profil mit den mehreren Parametern wird an einem Eingang 8a zugeführt und stellt über 41' Parameter des akustischen Modells 41, der lexikalischen Analyse 42 und der semantischen Analyse 43, die in Serie geschaltet sind, ein. Eine Dialogsteuerung 44 ist der semantischen Analyse nachgeordnet und kann alle drei genannten Funktionsblöcke beeinflussen und von Parametern des Profils über 41' beeinflußt werden. Sie steuert auch eine Display- oder Sprachausgabe 51, mit der eine Rückkopplung zum Urheber des Sprachsignals sₐ erfolgt. Aus der Dialogsteuerung 44 oder aus der semantischen Analyse 43 direkt ergibt sich ein Steuersignal 20, das das elektrische Gerät 52 zu einer Aktion veranlaßt, wenn es über den Ausgang 7a zum Eingang 52a des zu steuernden Gerätes 52 übertragen wird. Die Aktion kann auch eine innere Aktion im Rahmen des technischen Gerätes 52 selbst sein.

Folgend sind einzelne Funktionen der Funktionsblöcke 41,42,43 und 44 erläutert.

Das akustische Modell oder die akustischen Modelle 41 werden adaptiert durch Vorgabe von Parametern aus dem Profil, wobei ein Abschnitt des Gesamtprofils diese Parameter enthält. Möglich ist eine unüberwachte Adaption aller oder eines Teils der akustischen Modelle anhand des "maximum a posteriori Kriteriums". Akustische Modelle als solches sind Stand der Technik und können als HMM (Hidden Markov Model) oder als ein Sprachmodell Einsatz finden. Die Auswahl der einzustellenden Parameter geschieht anhand des zur Verfügung stehenden Trainingsmaterials der Sprecher, das zur Bildung des Profils geführt hat. Es ist bereits mit einer Äußerung eine Anpassung der akustischen Modelle möglich, dabei werden nur Mittelwerte der verwendeten Ausgabeverteilungsdichten verändert.

Ist als Profil das Standardprofil Pₓ ausgewählt, bei dem noch keine spezifische Zuordnung zum Sprachsignal vorliegt, so kann dieses Standardprofil im Laufe des Arbeitens des akustischen Modells 41 angepaßt werden und zur Abspeicherung eines sich ergebenden neuen Profils führen. Die Parameter werden in Form von Merkmalen gespeichert, um möglichst platzsparend speichern zu können.

Die Anpassung des akustischen Modells durch Einstellen von Parametern betrifft in der Regel die Einstellung von Merkmalen. Sind genügend Daten vorhanden, können neben den Mittelwerten auch Kovarianzen angepaßt werden.

Zur Verbesserung der Erkennung im akustischen Modell kann ein Anpassen auch insoweit erfolgen, daß das Sprachmodell an die Art der Übertragung oder die Art der Aufnahme des aktuellen Audiosignals angepaßt wird. Die Art der Übertragung spricht den Kanal an, über den das Audiosignal übertragen wurde, so das Festnetz, Mobilfunk oder Satellitenfunk. Die Art der Aufnahme spricht die Möglichkeit an, über eine Freisprechanlage oder ein Mikrophon zu sprechen, ebenso könnte die Digitalisierung berücksichtigt werden, oder die Verwendung eines analogen Audiosignals. Es ergibt sich in jedem Fall eine bessere akustische Auswertung im akustischen Modell 41.

Die Funktionseinheit 42, die auf die akustischen Modelle 41 folgt, enthält über das ausgewählte und geladene Profil einen vorgegebenen Wortschatz. Ein vorgegebener Wortschatz enthält spezifisch ausgewählte Wörter, die für das technische Gerät eine Bedeutung haben, und andere Worte.

Im Falle einer Telefonanlage können beispielsweise folgende Wörter als Schlüsselwörter in einem festen System-Wortschatz verankert sein, der nicht an den Sprecher angepaßt wird, sondern allenfalls an eine objektivierte Gruppe von Sprechern, also einen Kreis von Sprechern, die eine spezifische gemeinsame Eigenschaft besitzen, die erfaßbar ist. Ein Beispiel ist eine Wortschatzdefinition des festen System-Wortschatzes für eine Personengruppe, wie alle Bayern oder alle Berliner oder alle Sachsen.

Als Fundus für den festen Wortschatz (System-Wortschatz) können für den Betrieb einer Telefonanlage die Begriffe "Telefonnummer", "Nebenstelle", "Anschluß", "Nummer", "Umleitung", "umleiten", "Ruf", "Telefonbuch", "Konferenz", "Schaltung", "Verbindung", "verbunden" verwendet werden. Kontextworte wie "die", "das", "den", "dem", "unser", "unseren", "in", "im", "bei", "von" sind ein zweiter Bestandteil des System-Wortschatzes. Ein dritter Bestandteil besteht aus Gruppenzuordnungen, wie "Firma", "intern", "Abteilung". Ein vierter Bestandteil des System-Wortschatzes kann in Tätigkeiten bestehen, die vorgegeben werden, namentlich "werden", "aufheben", "navigieren", "auswählen", "Auswahl". Eine schließlich letzte Anteilsgruppe des System-Wortschatzes kann Schlüsselinformationen enthalten, die der Sprecher wünscht, wie "kein", "keine", "Ahnung", "weiß", "ich", "möchte", "will", "sprechen", "bitte". Es versteht sich, daß auch alle nötigen Ziffern z.B. zwischen 0 und 99 Gegenstand des System-Wortschatzes sind.

Ein dynamischer Wortschatzanteil wird von dem Profil, das ausgewählt und vorgegeben wird, bestimmt. Im dynamischen Wortschatz können Personen verzeichnet sein, mit denen der Sprecher, der über das Profil definiert ist, nicht sprechen will oder sprechen möchte. In einem ergänzenden Verfahren ist es möglich, nach einer durchgeführten Wahl über eine Telefonnummer eine oder mehrere Personen auch bisher nicht gewählter Anschlüsse mit in das Profil zu übernehmen, wobei als Kriterium eine gemeinsame Eigenschaft Anwendung finden kann.

In einer einfachen Variante kann auch einfach von einem definierten Wortschatz ausgegangen werden, der von dem Profil der lexikalischen Analyse 42 zugeordnet wird. Die lexikalische Analyse arbeitet mit dem ihr zugeordneten Fundus an Worten. In einer genaueren Aufteilung können die oben beschriebenen System-Worte zumindest teilweise übernommen werden; es kann auch eine Zuordnung bestimmter System-Worte zu einem bestimmten Profil erfolgen, während andere System-Worte zu einem anderen Profil zugeordnet werden. Bereits hierdurch kann die zuvor beschriebene Steuerungstiefe des zu steuernden Gerätes 52 profilabhängig werden.

Die lexikalische Analyse 42 durch den Wortschatz wird ergänzt durch eine Adaption der Grammatik im Sinne der Syntax. Äußerungen des Benutzers werden, wie bereits oben erwähnt, zum einen in Form akustischer Merkmale und in Form einer erkannten Kette gespeichert. Ab einer gewissen Anzahl von Äußerungen können Übergangswahrscheinlichkeiten zwischen Wörtern des zuvor beschriebenen Wortschatzes angepaßt werden, das die Produktionswahrscheinlichkeit der beobachteten Benutzeräußerungen maximiert. Dabei können u.U. ganze Pfade in der Syntax vollkommen ausgeschaltet werden.

Ein solches Ausschalten findet dann statt, wenn - für eine Telephonanlage - nur noch Äußerungen der Form "Herrn Müller der Firma Y" zugelassen werden, aber solche Äußerungen, wie "ich möchte Herrn Müller der Firma Y sprechen" nicht mehr zugelassen werden. Aus Gründen der Robustheit sollte jedoch die Möglichkeit gegeben werden, alternative Sprechformen zu berücksichtigen, allerdings schlechter zu bewerten.

Die für die Syntaxerkennung in 42 zugelassenen Wortfolgen können durch das Profil verändert sein. Die für die Erkennung zugelassenen Wortfolgen können auch durch den Systemzustand, insbesondere den Eingriff der Dialogsteuerung 44 verändert werden, wenn nur eine begrenzte Anzahl von Bedeutungen zugelassen oder erwartet werden. Der Wortschatz kann auch von der jeweiligen Stelle in der Folge mehrerer Worte abhängig sein, d.h. an bestimmten Stellen in einer Wortfolge werden nur bestimmte Worte aus dem durch das Profil zugeordneten Wortschatz zugelassen und damit erkannt. Die Einschränkung kann also sowohl die für das nächste Wort zur Verfügung stehenden Worte aus dem Wortschatz betreffen, wie auch die Menge der zur Erkennung zugelassenen Wortfolgen beeinflussen.

Eine semantische Analyse 43 ist der lexikalischen Analyse nachgeschaltet. Auch sie wird beeinflußt durch einen Ausschnitt der Parameter aus dem ausgewählten und geladenen Profil. Bei der semantischen Analyse werden Bedeutungen ermittelt, die einem Wort, einer Wortfolge oder einem ganzen Satz entspringen. Es können Wandel in der Bedeutung einfließen. Die Authentifizierung hat Einfluß auf die Profilauswahl und die diesbezüglich relevanten Parameter beeinflussen die semantische Analyse. Ein bestimmter Begriff einer spezifischen Person oder einer Personengruppe wird in der semantischen Analyse neu belegt, so der Begriff "mein" abhängig von dem Anrufer, oder der Begriff "Empfänger" für eine spezifisch wechselnde Person. Auch der Begriff "mein Mann" kann sich in der Bedeutung wandeln.

Eine Dialogsteuerung 44 arbeitet der semantischen Analyse nachgeordnet und beeinflußt alle drei Funktionen 41,42,43. Die semantische Analyse kann dann, wenn sie ein eindeutiges Ergebnis des Sinngehalts des Sprachsignals ermittelt, auch direkt den Ausgang 7a speisen.

Die Dialogsteuerung ist vorgelagert, um Fehler zu vermeiden, Redundanz zu erlauben und eine Anpassung der Erkennungsumgebung 4 an den Sprecher, respektive das ihm zuzuordnende Sprachsignal sₐ am Eingang 9a zu erlauben. Treten bei der Erkennung mehrmals Fehler auf, so wird in einen eingeschränkten Dialog umgeschaltet. Beispielsweise geschieht das dadurch, daß nur noch nach einem einzigen Eintrag im Rahmen einer akustischen Rückkopplung über die Sprachausgabe 51 und Lautsprecher 51a gefragt wird. Es wird dann eine Antwort von dem Sprecher über das Sprachsignal sₐ am Eingang 9a erwartet. Auf diese Antwort kann die Dialogsteuerung die akustischen Modelle, die lexikalische Analyse und die semantische Analyse voreinstellen.

Die zuvor beschriebene Umschaltung auf einen eingeschränkten Dialog kann auch mehrstufig erfolgen, also in der höchsten Stufe kann dem Sprachsignal ein großer Freiraum gegeben werden, in einer niedrigeren Stufe nur Vorname, Nachname und Firma, schließlich in einer letzten Stufe nur ein einzelner Eintrag. Diese Stufenauswahl kann über einen gesamten Dialog hinweg gleich bleiben.

Eine weitere Möglichkeit der Steuerung liegt in der Länge oder in dem Detail bzw. der Detaillierung der Sprachausgabe 51,51a. Ein vertrauter Benutzer braucht wenig Informationen über die Sprachausgabe durch die Dialogsteuerung, um das System zielgerichtet anzusprechen und zu beeinflussen. Für einen Anfänger werden längere Informationen als Prompts vorgesehen, um ihm genauer vorzugeben, was von ihm als Sprachsignal am Eingang 9a gewünscht wird. Die Abhängigkeit der Dialoglänge hängt von der Vertrautheit des Benutzers ab, was ein Merkmal in dem Profil sein kann, das ausgewählt und über 31,41' am Eingang 8a eingestellt wird.

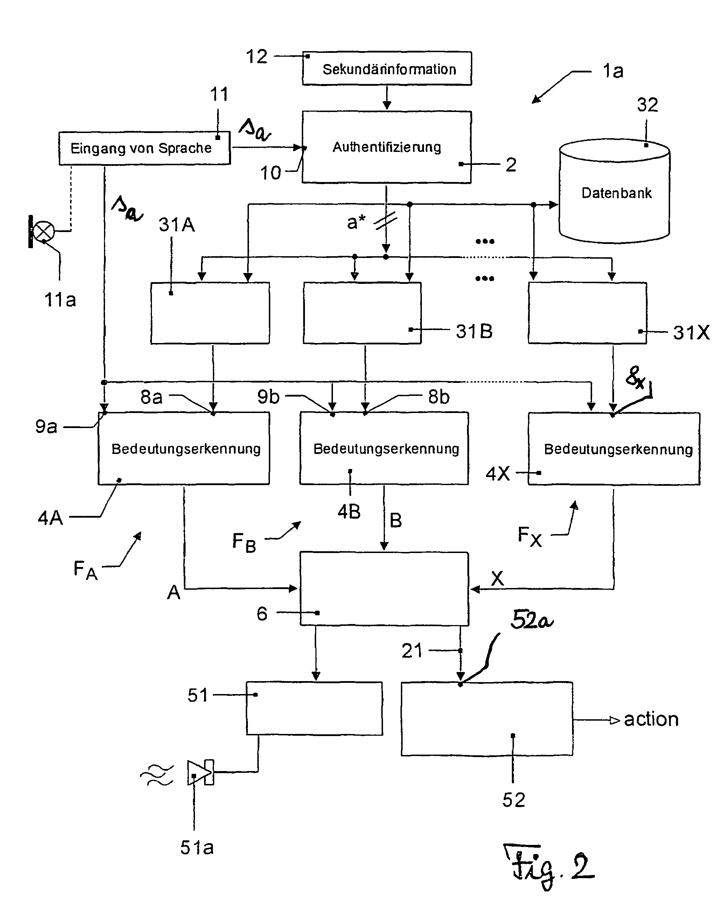

Aus **Figur 2** ist eine Parallelverarbeitung 1a ersichtlich. Sie arbeitet mit einem System gemäß Figur 1, dessen Erkennungsumgebung 4 so gestaltet ist, wie Figur 3 zeigt. Es sind mehrere parallele Linien F_{A} F_{B}, ...F_{J}, F_{X} vorgesehen, die beliebig erweiterbar sind, wobei J = A, B, ... X. Jedes Ausgangssignal A, B, C,...X einer Erkennungsumgebung 4A, 4B, 4C,...4X einer der Linien F_{J} wird einer Entscheidungsvorrichtung 6 zugeführt, die ein Ausgangssignal über eine Leitung 21 abgibt, das demjenigen der Leitung 20 aus Figur 1 entspricht, zur Steuerung des Geräts 52 über einen Eingang 52a. Jede Erkennungsumgebung wird von einer Profilzuordnung 31A, 31B ... 31X angesteuert, die aus der Datenbank 32 ein jeweiliges Profil abhängig von der Authentifizierung 2 ausliest und der zugehörigen Erkennungsumgebung über 8a,8b,...8x zuführt. Das Sprachsignal sₐ wird der Authentifizierung und allen Erkennungsumgebungen gleichermaßen über einen jeweiligen Eingang 9a, 9b ... zugeführt. Das Authentifizierungssignal a* wird allen Auswahlschaltungen 31A, 31B ... gleichermaßen zugeführt. Die Authentifizierung 2 selbst wird so über den Eingang 10 angesteuert, wie in Figur 1 gezeigt. Die Authentifizierung sorgt dafür, daß die zugeordneten Profile nicht dieselben sind.

Alle Zuordnungsschaltungen 31A, 31B, ... greifen auf die Datenbank 32 zu; für die Zuordnung kann eine Hilfs-Datenbank entsprechend der Sektion 31 * von Figur 3 herangezogen werden, die entweder der Zuordnungsschaltung oder der Authentifizierung 2 funktionell zugeordnet ist. Die mehrdimensionale Ausgestaltung des Authentifizierungssignals a* sorgt dafür, daß jede Bedeutungserkennung 4A,4B,... ein eigenständiges Profil erhält, so daß alle an der Parallelverarbeitung beteiligten Erkennungslinien mit unterschiedlichen Profilen arbeiten.

Die gleichzeitige Analyse über verschiedene eingestellte Profile in den verschiedenen Erkennungsumgebungen, die alle parallel arbeiten, erlaubt eine genauere Anpassung und eine bessere Erkennung eines schwierigen Sprachsignals sₐ. Während des Sprachsignals arbeiten alle Erkennungen mit ihren akustischen Modellen parallel, nur unterschiedlich dadurch, daß andere Merkmale (Mittelwerte oder Kovarianzen) eingestellt sind. Das Ausgangssignal A, B oder X einer Bedeutung wird über die entsprechende Leitung in der Entscheidungsvorrichtung 6 auf die Mehrheit oder auf einen Schwellenwert hin überprüft. Das Ausgangssignal auf Leitung 21 steuert das technische Gerät 52 über seinen Eingang 52a. Die Schwellenüberprüfung kann durch eine Strahlsuche erfolgen (eine Suche, die alle Erkennungspfade unterdrückt, deren Bewertung unter der Schwelle liegt, wobei die Schwelle durch die Bewertung des zu dieser Zeit besten Pfades liegt). Es ist wahrscheinlich, daß nach einer kurzen Zeit nur noch solche Pfade innerhalb eines Systems nach Figur 2 wirksam sind. Dadurch werden im weiteren Verlauf der Spracherkennung alle anderen Profile, deren Ausgangssignal unter der Schwelle liegt, nicht mehr ausgewertet.

Der Entscheidungseinrichtung 6 kann auch eine Signalausgabe 51,51a, die akustischer Natur oder als Display optischer Natur ist, ansteuern. Mit ihr können Rückkopplungen angestoßen werden, wenn sich bei der Festlegung der für die Steuerung maßgebenden Auswahleingänge A,B, etc. Differenzen ergeben, die es notwendig erscheinen lassen, eine Rückfrage einzuleiten, eine Information zur Bedienung auszugeben oder lediglich Statussignale verfügbar zu machen.

Ein Profil ist bislang als in der Datenbank 32 vorhanden angesehen worden. Die Erstellung eines solchen Profils war oben bereits skizziert. Sie erfolgt während des Auswertens eines akustischen Signales sₐ im akustischen Modell, in der lexikalischen Analyse und in der semantischen Analyse. Das eingangs angesprochene Standardprofil kann so beeinflußt werden und rückgespeichert werden, zur Bildung eines neuen Profils. Diese Rückspeicherung kann sowohl bei Figur 1 erfolgen, wenn ein einzelner Erkennungspfad 31, 4 Anwendung findet, wie auch bei Figur 2, wenn drei Erkennungspfade F_{A}, F_{B} und F_{X} Anwendung finden.

Sind die mehreren Erkennungspfade gemäß Figur 2 vorgesehen, kann auch eine alternative Bildung eines neuen Profils gewählt werden. Bleiben bei dieser Art der Verarbeitung des Sprachsignals am Ende noch mehrere Pfade mit unterschiedlichen Profilen aus der Datenbank übrig, so werden die statistischen Eigenschaften entsprechend der statistischen Bewertung der besten Pfade innerhalb der verschiedenen Interessensprofile aufsummiert, und es entsteht ein neues Profil, das abgespeichert wird.

Die Bildung eines neuen Profils kann auch die Änderung eines bestehenden Profils sein, das an seinen Speicherplatz zurückgespeichert wird, unter Berücksichtigung der sich während der Auswertung der Sprache ergebenden Änderungen in den Merkmalen gemäß den Einzelfunktionen 41, 42, 43, ggf. auch unter Berücksichtigung von Änderungen in der Einrichtung der Dialogsteuerung 44.

Eine Vorgehensweise bei der Bildung eines neuen Profils kann bei der Anwendung der Struktur nach Figur 2 darin liegen, eine Erkennungslinie, beispielsweise F_{X}, immer mit dem Standardprofil zu betreiben, während das gleiche Sprachsignal über ein anderes ausgewähltes Profil aus der Datenbank 32 in zumindest einem der anderen Pfade nach Maßgabe der Authentifizierung 2 und der Zuordnung 31 ausgewertet wird. Das Ergebnis des Standard profils kann dann verglichen werden mit dem Ergebnis des eigentlich ein besseres Ergebnis versprechenden Spezialprofils.

Wird in einer Parallelverarbeitung regelmäßig ein Standardprofil Pₓ verwendet, braucht diese Profilauswahl nicht von der Authentifizierung 2 mit angesteuert zu werden, sondern bleibt unabhängig davon.

Neben einer Anpassung des Standardprofiles an einen Sprecher kann auch eine Verbesserung des Standards selbst erfolgen, durch Ergänzung von Merkmalen der akustischen Modelle, der lexikalischen Analyse oder der semantischen Analyse. Dieses neu gebildete Standardprofil wird in der Datenbank 32 so zurückgespeichert, daß es für alle parallelen Profilauswahlen als Standardprofil wieder verfügbar ist.

Erfolgt die parallele Verarbeitung regelmäßig mit einem Standard profil kann auch die durch Sekundärinformation fehlgeleitete Vorauswahl eines Profils behoben werden. Ruft über eine Nebenstelle regelmäßig derselbe Sprecher an, und wird diese Nebenstelle einmal von einem anderen Benutzer verwendet, so wäre die Auswahl über die Sekundärinformation im Rahmen der Authentifizierung 2 unrichtig. Hier hilft die standardmäßig verwendete Erkennung über das Standardprofil im Erkennungspfad F_{X}, deren Erkennungsergebnis X im automatischen Entscheider 6 über einen Schwellenwert oder über eine Gütefunktion mit dem Erkennungsergebnis des eigentlich besseren Profils verglichen wird. Die Entscheidungseinrichtung legt fest, welche Erkennung sicherer funktioniert hat, und nimmt das entsprechende Profil aus dem Speicher 32.

## Patentansprüche

1. Verfahren zum sprachgesteuerten Anpassen, Steuern oder Betreiben eines technischen Geräts (52), wobei
- in einer ersten Linie (F_{A}) gemäß den Merkmalen (b) und (c) ein erstes Profil (31A) entsprechend dem Ausgangssignal einer Authentifizierung (2) ausgewählt und einer ersten Erkennungsumgebung (4A) zugeordnet wird;
(a) welche Authentifizierung (2) für eine Sprechererkennung aufgrund eines ersten Authentifizierungsversuchs (2) angepasst ist, insbesondere durch einen zeitlichen Abschnitt des Audiosignals (sₐ), durch Erkennen einer Selbstauthentifizierung mittels aktiven Zutuns, oder durch Auswerten von Sekundärindizien (12), wie eine bekannte Telefon-Nummer, ein Nebenstellen-Anschluß, um einen Sprecher als Individuum oder eine objektivierte Gruppe von Sprechern festzulegen, der der Sprecher durch objektivierte Kriterien des auf ihn zurückzuführenden Audiosignals zuzuordnen ist, und ein entsprechendes Ausgangssignal (a,a*) abgibt;
- in einer zweiten Linie (F_{B}) auch entsprechend den Merkmalen (b) und (c), aber gesondert von der vorhergehenden Linie (F_{A}) eine Auswahl und eine Einbindung eines anderen Profils (31B) in einer zweiten Erkennungsumgebung (4B) erfolgt, auch abhängig von dem Ausgangssignal (a*) der Authentifizierung (2); wobei
(b) gestützt auf das Ausgangssignal (a,a*) der Authentifizierung ein zum festgelegten Sprecher oder zur objektivierten Gruppe korrespondierendes Profil (33) aus einer Vielzahl gespeicherter Profile (32,Pᵢ) ausgewählt (2,31) wird;
(c) das ausgewählte Profil (33) in die jeweilige Erkennungsumgebung (4) eingebunden oder geladen wird, um die jeweilige Erkennungsumgebung auf den festgelegten Sprecher oder die objektivierte Gruppe hin anzupassen; wobei
eine Entscheidungseinrichtung (6) Ausgangssignale (A,B) der Erkennungsumgebungen (4A,4B) der beiden Linien (FA,FB) bewertet, um eine der beiden auszuwählen und dem zu steuernden Gerät (52) Steuersignale zuzuführen, die der Bedeutung des ausgewählten Signals entweder der ersten oder der zweiten Erkennungslinie entsprechen.

2. Verfahren nach Anspruch 1, wobei jede Erkennungsumgebung aus dem Audiosignal (sₐ) entsprechend dem eingebundenen oder geladenen Profil einen eigenständigen Bedeutungsgehalt ermittelt, der einem Steuersignal entspricht, das dem zu steuernden Gerät (52) über einen Eingang (52a) zugeführt ist.

3. Verfahren nach Anspruch 1, wobei eine dritte eigenständige Linie (F_{X}) vorgesehen ist, die entsprechend der ersten und zweiten Linie ausgebildet ist und deren Ausgangssignal (C) einem Bedeutungsgehalt zumindest eines Abschnitts des Audiosignals entspricht, um der Entscheidungseinrichtung (6) zugeführt zu werden, wobei die Entscheidungseinrichtung (6) denjenigen Bedeutungsgehalt aus den drei zugeführten Bedeutungen (A,B,C) auswählt, der in der Mehrzahl ist, um ihn an das Gerät (52) über dessen Eingang (52a) zu übertragen.

4. Verfahren nach Anspruch 1, zum sprachgesteuerten Betreiben des technischen Geräts (52), wie eine Telefonvermittlung oder eine Telefonanlage, wobei ein Audiosignal (sₐ) aus zumindest einem von einem Sprecher abgegebenen Wort, insbesondere mehreren aufeinanderfolgenden Worten, welches oder welche einen **Bedeutungsgehalt** besitzen und insoweit erkannt werden sollen, einem ersten Signaleingang (10) der Authentifizierungseinrichtung (2) zugeführt werden; wobei
(a) die **Sprechererkennung** aufgrund des ersten Authentifizierungsversuchs (2) erfolgt, insbesondere durch einen zeitlichen Abschnitt des Audiosignals (sₐ), durch Erkennen einer Selbstauthentifizierung mittels aktiven Zutuns, oder durch Auswerten von Sekundärindizien (12), wie eine bekannte Telefon-Nummer, ein Nebenstellen-Anschluß, um einen Sprecher als Individuum oder eine objektivierte Gruppe von Sprechern festzulegen, der der Sprecher durch objektivierte Kriterien des auf ihn zurückzuführenden Audiosignals zuzuordnen ist, und ein entsprechendes Ausgangssignal (a,a*) abzugeben;
(b) gestützt auf das Ausgangssignal (a,a*) der Authentifizierung ein zum festgelegten Sprecher oder zur objektivierten Gruppe korrespondierendes Profil (33) aus einer Vielzahl gespeicherter Profile (32,Pᵢ) ausgewählt (2,31) wird;
(c) das ausgewählte Profil (33) in die erste bzw. zweite Erkennungsumgebung (4) eingebunden oder geladen wird, um die Erkennungsumgebung auf den festgelegten Sprecher oder die objektivierte Gruppe hin anzupassen; wobei
(d) jedes der gespeicherten Profile (Pᵢ) und das eingebundene oder geladene Profil (33) Parameter enthält, zur Beeinflussung zumindest einer in der Erkennungsumgebung (4) vorgesehenen Wortfolgeerkennung (42).

5. Verfahren nach Anspruch 4, bei dem nach einem Authentifizierungsversuch, der kein Profil für das aktuelle Sprachsignal als korrespondierend ergibt, ein Standardprofil (Pₓ) ausgewählt wird und in die erste oder zweite Erkennungsumgebung eingebunden wird (33).

6. Verfahren nach Anspruch 5, bei dem das in der Erkennungsumgebung geladene Standard-Profil (Pₓ) während einer zeitlichen Dauer des Sprachsignals als aktuelles Audiosignal auf dieses Sprachsignal hin angepaßt wird, um zu einem individuellen Profil (Pᵢ) zu werden, das abgespeichert wird (32).

7. Verfahren nach Anspruch 4, wobei die objektivierte Gruppe ein Kreis von Personen ist, der zumindest eine gemeinsame, erfaßbare Eigenschaft besitzt, die eine objektivierte Zuordnung erlaubt, ob der über das Audiosignal zugeordnete Sprecher zu dem Kreis von Personen zuzuordnen ist oder nicht.

8. Verfahren nach Anspruch 7, wobei die Eigenschaft hörbar, meßbar oder durch einen lokalen Zustand der Befindlichkeit definiert ist.

9. Verfahren nach Anspruch 4, wobei abhängig vom Ausgangssignal (a,a*) der Authentifizierung (2) der Bedeutungsgehalt eines von der Erkennungsumgebung erkannten objektiven Wortes oder Wortfolge im Audiosignal (sₐ) einem Bedeutungswandel unterworfen wird, um das technische Gerät (52) entsprechend der gewandelten Bedeutung zu steuern.

10. Verfahren nach Anspruch 4, wobei eine Wortfolgeerkennung (42) in der Erkennungsumgebung über einen durch das eingebundene Profil (33) vorgegebenen Wortschatz verfügt.

11. Verfahren nach Anspruch 4 oder 10, wobei eine Wortfolgeerkennung vorgesehen ist, welche eine Syntaxerkennung beinhaltet.

12. Verfahren nach Anspruch 4 oder 10, wobei der Wortfolgeerkennung (42) in der Erkennungsumgebung (4) eine semantische Analyse (43) nachgeordnet ist, die von zumindest einem der Parameter des eingebundenen Profils (33) beeinflußt wird.

13. Verfahren nach Anspruch 4 oder 10, wobei ein Profil (Pᵢ) Parameter enthält, für die Vorgabe eines Wortschatzes aus einem vorgegebenen Anteil von Worten eines Systemwortschatzes und einem sprecherspezifischen Anteil von Worten.

14. Verfahren nach Anspruch 13, wobei der vorgegebene Bestandteil des Wortschatzes festgelegte Worte enthält, die abhängig von einer objektivierten Gruppe von Sprechern ist.

15. Verfahren nach Anspruch 4 oder 13, wobei im Profil zumindest ein Parameter für die Einstellung einer Syntaxerkennung bei der Wortfolgeerkennung als zweiten akustischen Erkennungsabschnitt (42) der Erkennungsumgebung (4) enthalten sind.

16. Verfahren nach Anspruch 4 oder 15, wobei ein Profil zumindest einen Parameter zur Beeinflussung einer semantischen Analyse (43) als einen dritten akustischen Erkennungsabschnitt in der Erkennungsumgebung (4) besitzt.

17. Verfahren nach Anspruch 4, wobei ein Profil zumindest einen Parameter zur Veränderung einer Dialogsteuerung (44) in der Erkennungsumgebung (4) besitzt.

18. Verfahren nach Anspruch 4 oder 17, wobei mit einer Dialogausgabe (44,51) als akustische oder optische Signalisierung ein Wechsel des in die Erkennungsumgebung (4) geladenen Profils vorbereitet oder veranlaßt wird.

19. Verfahren nach Anspruch 4, wobei die gespeicherten Profile (Pᵢ) individuelle, insbesondere individualisierte Profile sind.

20. Verfahren nach Anspruch 4, wobei bei der Durchführung einer Sprachbearbeitung in der Erkennungsumgebung (4) gleichzeitig Schlüsselworte zur Steuerung des technischen Gerätes (52) und Suchworte zur Ermittlung vorgespeicherter Informationen, wie Telefon-Nummern, Benutzerkennungen, mit dem Audiosignal (sₐ) verglichen werden, ohne eine Aufteilung der Sprachsignale in einen zeitlichen Abschnitt für die Erkennung von Suchworten und einen zweiten zeitlichen Abschnitt für die Erkennung von Schlüsselworten.

21. Verfahren nach Anspruch 6, wobei die Veränderung des Standard-Profils (Pₓ) zu einem individuellen Profil während der Dauer der Einbindung in die Erkennungsumgebung (4) erfolgt, wobei das gespeicherte Standard-Profil außerhalb der Erkennungsumgebung unverändert bleibt, aber die Individualisierung des geladenen Standard-Profils erfolgt:
- durch Veränderung, insbesondere Reduzieren des vom Profil vorgegebenen Wortschatzes;
und/oder
- durch Verändern der Parameter für die Eigenschaft einer optischen oder akustischen Dialogausgabe (44,51);
und/oder
- durch Verändern einer zur Erkennung zugelassenen Menge von Wortfolgen des vom Profil vorgegebenen Wortschatzes oder des reduzierten Wortschatzes.

22. Verfahren nach Anspruch 4, wobei ein Profil (Pᵢ) Parameter enthält für zumindest ein akustisches Modell (41) in Form von Merkmalen zur Anpassung des zumindest einen Modells an kehlkopfspezifische Merkmale des das Audiosignal erzeugenden Sprechers (Spracheigenschaft), zum Laden (8a) in einen akustischen Erkennungsabschnitt (41) der Erkennungsumgebung (4).

23. Verfahren nach Anspruch 4, wobei die Wortfolgeerkennung (42) eingeschränkt wird, insbesondere durch Herabsetzen der Anzahl der verwendbaren Worte oder durch Einschränken der zur Erkennung zugelassenen Wortfolgen.

24. Verfahren nach Anspruch 23, wobei die Einschränkung nach Ausgabe eines Signals (51,51a) zur optischen oder akustischen Signalisierung an einen Benutzer erfolgt.

25. Verfahren nach Anspruch 4, wobei beim Authentifizierungsversuch (2) über eine zweite Datenbank (31*) ein Benutzer einem individuellen Profil aus der ersten Datenbank (32) zugeordnet wird.

26. Verfahren nach Anspruch 25, wobei die zweite Datenbank (31*) Einträge besitzt, die geändert oder ergänzt werden, wenn ein neues individuelles Profil in der Erkennungsumgebung (4) erstellt und in der ersten Datenbank (32) abgespeichert wird.

27. Verfahren nach Anspruch 4 oder 22, wobei zur Verbesserung der Erkennung in der Erkennungsumgebung (4) in einem akustischen Modell (41) eine Anpassung an eine Art der Übertragung oder eine Art der Aufnahme des aktuellen Audiosignals (sₐ) erfolgt.

28. Verfahren nach Anspruch 4, wobei die Wortfolgeerkennung (42) nach einem erkannten Wort für das nächste zu erkennende Wort eine Begrenzung der verfügbaren Worte vornimmt, die durch das Profil zugeordnet oder vorgegeben werden.

29. Verfahren nach Anspruch 28, wobei das Audiosignal in einer erkannten Kette von Worten gespeichert wird.

30. Verfahren nach Anspruch 4, bei dem vor dem Auswählen oder Zuordnen eines gespeicherten Profils eine reduzierte Anzahl wahrscheinlicher Profile, die sich im Umfang der gespeicherten Profile befinden, als Auswahlmöglichkeiten bereitgestellt werden, um eine Vorab-Auswahl von - vermutlich zuzuordnenden - Profilen als einen eingeschränkten Auswahlbereich zur Verfügung zu stellen, und daraus ein an das Audiosignal am besten angepasste Profil auszuwählen und in die erste oder zweite Erkennungsumgebung (4) zu laden (33).

31. Verfahren nach Anspruch 4, bei dem das ausgewählte und eingebundene (33) Profil zumindest ein HMM oder ein Sprachmodell für ein akustisches Modell (41) **als ersten** Erkennungsabschnitt in der Erkennungsumgebung (4) umfaßt.

32. Verfahren nach Anspruch 4, bei dem abhängig von dem ausgewählten und geladenen (33) Profil mehr oder weniger Schlüsselworte oder mehr oder weniger Informationseinträge (gespeicherte Informationen) zugelassen werden oder über das Audiosignal gesteuert auswählbar sind, um die Steuerungstiefe der Steuerung des technisches Gerätes (52) von dem aktuellen Audiosignal und damit von dem authentifizierten Sprecher abhängig zu machen.

## Claims

1. Process for voice-controlled adaptation, control or operation of a technical apparatus (52), wherein
- in a first line (F_{A}) according to features (b) and (c), a first profile (31A) is selected according to the output signal of authentication (2) and assigned to a first recognition environment (4A);
(a) which authentication (2) is adapted for speaker recognition on the basis of a first authentication test (2), in particular by a time section of the audio signal (sₐ), by recognising self-authentication by means of active assistance, or by evaluating secondary signs (12), such as a known telephone number, an extension, in order to establish a speaker as an individual or an objectified group of speakers, to which the speaker is to be assigned by objectified criteria of the audio signal to be traced back to him, and emits a corresponding output signal (a, a*);
- in a second line (F_{B}), also corresponding to features (b) and (c) but separate from the preceding line (F_{A}), selection and integration of a different profile (31B) takes place in a second recognition environment (4B), also depending on the output signal (a*) of authentication (2); wherein
(b) based on the output signal (a, a*) of authentication, a profile (33) corresponding to the established speaker or to the objectified group is selected (2, 31) from a multitude of stored profiles (32, Pᵢ);
(c) the selected profile (33) is integrated or loaded into the particular recognition environment (4), in order to adapt the particular recognition environment to the established speaker or the objectified group; wherein
a decision device (6) assesses output signals (A, B) of the recognition environments (4A, 4B) of the two lines (FA, FB), in order to select one of the two and to supply control signals, which correspond to the meaning of the selected signal either of the first or of the second recognition line, to the apparatus (52) to be controlled.

2. Process according to claim 1, wherein each recognition environment ascertains an independent meaning content from the audio signal (sₐ) according to the integrated or loaded profile, which meaning content corresponds to a control signal, which is supplied to the apparatus (52) to be controlled via an input (52a).

3. Process according to claim 1, wherein a third independent line (Fₓ) is provided, which is formed corresponding to the first and second line and the output signal (C) of which corresponds to a meaning content at least of a section of the audio signal, in order to be supplied to the decision device (6), wherein the decision device (6) selects that meaning content from the three supplied meanings (A, B, C) which is in the majority, in order to transmit it to the apparatus (52) via its output (52a).

4. Process according to claim 1, for voice-controlled operation of the technical apparatus (52), such as a telephone exchange or telephone equipment, wherein an audio signal (sₐ) from at least one word emitted by a speaker, in particular several sequential words, which have a meaning content and are to be recognised in this respect, are supplied to a first signal input (10) of the authentication device (2); wherein
(a) the speaker recognition takes place on the basis of the first authentication test (2), in particular by a time section of the audio signal (sₐ), by recognising self-authentication by means of active assistance, or by evaluating secondary signs (12), such as a known telephone number, an extension, in order to establish a speaker as an individual or an objectified group of speakers, to which the speaker is to be assigned by objectified criteria of the audio signal to be traced back to him, and to emit a corresponding output signal (a, a*);
(b) based on the output signal (a, a*) of authentication, a profile (33) corresponding to the established speaker or to the objectified group is selected (2, 31) from a multitude of stored profiles (32, Pᵢ);
(c) the selected profile (33) is integrated or loaded into the first or second recognition environment (4), in order to adapt the recognition environment to the established speaker or the objectified group; wherein
(d) each of the stored profiles (Pᵢ) and the integrated or loaded profile (33) contains parameters for influencing at least one word order recognition (42) provided in the recognition environment (4).

5. Process according to claim 4, in which after an authentication test, which does not produce a profile for the actual speech signal which is corresponding, a standard profile (Pₓ) is selected and is integrated (33) into the first or second recognition environment.

6. Process according to claim 5, in which the standard profile (Pₓ) loaded in the recognition environment is adapted to this speech signal during a time period of the speech signal as an actual audio signal in order to become an individual profile (Pᵢ) which is stored (32).

7. Process according to claim 4, wherein the objectified group is a circle of people which has at least one common property which can be recorded, which permits an objectified assignment, whether the speaker assigned via the audio signal is to be assigned to the circle of people or not.

8. Process according to claim 7, wherein the property can be heard, measured or is defined by a local status of the location.

9. Process according to claim 4, wherein depending on the output signal (a, a*) of authentication (2), the meaning content of an objective word or word order recognised by the recognition environment in the audio signal (sₐ) is subjected to a meaning change in order to control the technical apparatus (52) in accordance with the changed meaning.

10. Process according to claim 4, wherein word order recognition (42) in the recognition environment has a vocabulary preset by the integrated profile (33).

11. Process according to claim 4 or 10, wherein word order recognition is provided which contains syntax recognition.

12. Process according to claim 4 or 10, wherein semantic analysis (43) is arranged downstream of word order recognition (42) in the recognition environment (4) and is influenced by at least one of the parameters of the integrated profile (33).

13. Process according to claim 4 or 10, wherein a profile (Pᵢ) contains parameters for presetting a vocabulary from a preset proportion of words of a system vocabulary and a speaker-specific proportion of words.

14. Process according to claim 13, wherein the preset constituent of the vocabulary contains established words and is dependent on an objectified group of speakers.

15. Process according to claim 4 or 13, wherein in the profile at least one parameter for adjusting syntax recognition during word order recognition is present as second acoustic recognition section (42) of the recognition environment (4).

16. Process according to claim 4 or 15, wherein a profile has at least one parameter for influencing semantic analysis (43) as a third acoustic recognition section in the recognition environment (4).

17. Process according to claim 4, wherein a profile has at least one parameter for changing a dialog control (44) in the recognition environment (4).

18. Process according to claim 4 or 17, wherein a change of the profile loaded into the recognition environment (4) is prepared or activated by a dialog output (44, 51) as acoustic or optical signalling.

19. Process according to claim 4, wherein the stored profiles (Pᵢ) are individual, in particular individualised profiles.

20. Process according to claim 4, wherein when carrying out speech processing in the recognition environment (4), at the same time keywords for controlling the technical apparatus (52) and search words for determining pre-stored information, such as telephone numbers, passwords, are compared with the audio signal (sₐ), without distribution of the speech signals into a time section for recognition of search words and a second time section for recognition of keywords.

21. Process according to claim 6, wherein the change in standard profile (Pₓ) to an individual profile takes place during the period of integration into the recognition environment (4), wherein the stored standard profile remains unchanged outside the recognition environment, but the individualisation of the loaded standard profile takes place:
- by changing, in particular reducing, the vocabulary preset by the profile;
and/or
- by changing the parameters for the property of an optical or acoustic dialog output (44, 51);
and/or
- by changing a quantity of word orders admitted for recognition of the vocabulary preset by the profile or of the reduced vocabulary.

22. Process according to claim 4, wherein a profile (Pᵢ) contains parameters for at least one acoustic model (41) in the form of features for adapting the at least one model to throat-specific features of the speaker (speech property) producing the audio signal, for loading (8a) into an acoustic recognition section (41) of the recognition environment (4).

23. Process according to claim 4, wherein the word order recognition (42) is restricted, in particular by reducing the number of words which can be used or by restricting the word orders admitted for recognition.

24. Process according to claim 23, wherein the restriction takes place after output of a signal (51, 51a) for optical or acoustic signalling to a user.

25. Process according to claim 4, wherein during the authentication test (2) via a second database (31*), a user is assigned to an individual profile from the first database (32).

26. Process according to claim 25, wherein the second database (31*) has entries which are changed or supplemented when a new individual profile is generated in the recognition environment (4) and stored in the first database (32).

27. Process according to claim 4 or 22, wherein to improve the recognition in the recognition environment (4) in an acoustic model (41), adaptation to a type of transmission or a type of recording of the actual audio signal (sₐ) takes place.

28. Process according to claim 4, wherein the word order recognition (42) carries out restriction of the available words, which are assigned or preset by the profile, after a recognised word for the next word to be recognised.

29. Process according to claim 28, wherein the audio signal is stored in a recognised chain of words.

30. Process according to claim 4, in which before selecting or assigning a stored profile, a reduced number of probable profiles, which are situated within the scope of the stored profiles, are provided as selection possibilities, in order to provide an advance selection of profiles - presumably to be assigned - as a restricted selection range, and to select therefrom a profile best adapted to the audio signal and to load (33) it into the first or second recognition environment (4).

31. Process according to claim 4, in which the selected and integrated (33) profile comprises at least one HMM or a speech model for an acoustic model (41) as first recognition section in the recognition environment (4).

32. Process according to claim 4, in which, depending on the selected and loaded (33) profile, more or fewer keywords or more or fewer information entries (stored information) are admitted or can be selected in controlled manner via the audio signal, in order to make the control depth of control of the technical apparatus (52) dependent on the actual audio signal and hence on the authenticated speaker.

## Revendications

1. Procédé d'adaptation, de commande ou d'exploitation par commande vocale d'un appareil technique (52), dans lequel :
- sur une première ligne (F_{A}), conformément aux caractéristiques (b) et (c), un premier profil (31A) est choisi en fonction du signal sortant d'un dispositif d'authentification (2) et est affecté à un premier environnement de reconnaissance (4A) ;
(a) lequel dispositif d'authentification (2) est adapté à une reconnaissance vocale sur la base d'un premier test d'authentification (2), en particulier sur une section temporelle du signal audio (Sₐ), par reconnaissance d'une auto-authentification par intervention active, ou par exploitation d'indices secondaires (12), tels qu'un numéro de téléphone connu, une connexion de poste supplémentaire, pour définir un locuteur comme un individu ou un groupe objectivé de locuteurs auquel le locuteur doit être affecté par des critères objectivés du signal audio qui doit lui être imputé, et émet un signal sortant (a,a*) correspondant ;
- sur une deuxième ligne (F_{B}), on effectue, également conformément aux caractéristiques (b) et (c), mais séparément de la ligne précitée (F_{A}) , une sélection et une intégration d'un autre profil (31B) dans un deuxième environnement de reconnaissance (4B), également en fonction du signal sortant (a*) de l'authentification (2) ; où
(b) l'on sélectionne (2,31), en s'appuyant sur le signal sortant (a,a*) de l'authentification, un profil (33) correspondant au locuteur déterminé ou au groupe objectivé parmi une pluralité de profils mémorisés (32, Pᵢ) ;
(c) le profil sélectionné (33) est intégré ou chargé dans l'environnement de reconnaissance (4) respectif pour adapter l'environnement de reconnaissance respectif au locuteur déterminé ou au groupe objectivé ; où
un dispositif décisionnel (6) évalue des signaux sortants (A,B) des environnements de reconnaissance (4A,4B) des deux lignes (F_{A}, F_{B}) pour sélectionner un des deux et acheminer à l'appareil à commander (52) des signaux de commande qui correspondent à la signification du signal sélectionné soit à la première, soit à la seconde ligne de reconnaissance.

2. Procédé selon la revendication 1, dans lequel chaque environnement de reconnaissance détermine à partir du signal audio (sₐ) en fonction du profil intégré ou chargé un contenu de signification autonome, qui correspond à un signal de commande qui est acheminé à l'appareil à commander (52) par une entrée (52a).

3. Procédé selon la revendication 1, dans lequel il est prévu une troisième ligne autonome (Fₓ) qui est formée en fonction de la première et de la deuxième ligne et dont le signal sortant (C) correspond à un contenu de signification d'au moins une section du signal audio pour être acheminé au dispositif décisionnel, dans lequel le dispositif décisionnel (6) sélectionne parmi les significations acheminées (A,B,C) le contenu de signification, qui est présent en majorité, pour le transmettre à l'appareil (52) par son entrée (52a).

4. Procédé selon la revendication 1, pour l'exploitation par commande vocale de l'appareil technique (52a), tel qu'un central téléphonique ou une installation téléphonique, dans lequel un signal audio (sₐ) formé d'au moins un mot délivré par un locuteur, en particulier plusieurs mots successifs, lequel ou lesquels possèdent un contenu de signification et seront reconnus sur ce point, est acheminé à une première entrée de signal (10) du dispositif d'authentification (2) ; dans lequel
(a) la reconnaissance vocale se fait sur la base d'une premier test d'authentification (2), en particulier sur une section temporelle du signal audio (sₐ), par reconnaissance d'une auto-authentification au moyen d'une intervention active, ou par exploitation d'indices secondaires (12), tels qu'un numéro de téléphone connu, une connexion de poste supplémentaire, pour définir un locuteur comme un individu ou un groupe objectivé de locuteurs auquel le locuteur doit être affecté par des critères objectivés du signal audio qui doit lui être imputé et émettre un signal sortant (a,a*) correspondant ;
(b) l'on sélectionne (2,31), en s'appuyant sur le signal sortant (a,a*) du dispositif d'authentification, un profil (33) correspondant au locuteur déterminé ou au groupe objectivé parmi une pluralité de profils mémorisés (32,Pᵢ) ;
(c) le profil sélectionné (33) est intégré ou chargé dans le premier ou le deuxième environnement de reconnaissance (4) pour adapter l'environnement de reconnaissance au locuteur déterminé ou au groupe objectivé ; où
(d) chacun des profils mémorisés (Pᵢ) et le profil (33) intégré ou chargé contiennent des paramètres pour influer au moins sur une reconnaissance de suites de mots (42) prévue dans l'environnement de reconnaissance (4).

5. Procédé selon la revendication 4, dans lequel, après un test d'authentification, qui ne donne lieu à aucun profil correspondant pour le signal vocal courant, on choisit un profil standard (Pₓ) qui est intégré au premier ou au deuxième environnement de reconnaissance (33).

6. Procédé selon la revendication 5, dans lequel on adapte à ce signal vocal le profil standard (Pₓ) chargé dans l'environnement de reconnaissance pendant une période temporelle du signal vocal comme signal audio courant pour qu'il devienne un profil individuel (Pᵢ) qui est mémorisé (32) .

7. Procédé selon la revendication 4, dans lequel le groupe objectivé est un cercle de personnes qui possède au moins une propriété commune vérifiable, qui permet d'établir de manière objectivée si le locuteur affecté via le signal audio doit être affecté au cercle de personnes ou non.

8. Procédé selon la revendication 7, dans lequel la propriété est audible, mesurable ou définie par un état existentiel local.

9. Procédé selon la revendication 4, dans lequel, en fonction du signal sortant (a,a*) du dispositif d'authentification (2), le contenu de signification d'un mot objectif ou d'une suite de mots dans le signal audio (Sₐ) reconnu(e) dans l'environnement de reconnaissance est soumis à un changement de signification pour commander l'appareil technique (52) en fonction de la signification changée.

10. Procédé selon la revendication 4, dans lequel la reconnaissance d'une suite de mots (42) dans l'environnement de reconnaissance dispose d'un vocabulaire prédéterminé par le profil intégré (33).

11. Procédé selon la revendication 4 ou 10, dans lequel il est prévu la reconnaissance d'une suite de mots qui comprend une reconnaissance de syntaxe.

12. Procédé selon la revendication 4 ou 10, dans lequel on effectue après la reconnaissance d'une suite de mots (42) dans l'environnement de reconnaissance (4) une analyse sémantique (43) qui est influencée par au moins un des paramètres du profil intégré (33).

13. Procédé selon la revendication 4 ou 10, dans lequel un profil (P_{I}) comprend des paramètres pour prédéterminer un vocabulaire formé d'une fraction prédéterminée de mots d'un vocabulaire système et d'une fraction de mots spécifique au locuteur.

14. Procédé selon la revendication 13, dans lequel la partie prédéterminée du vocabulaire contient des mots déterminés qui dépendent d'un groupe objectivé de locuteurs.

15. Procédé selon la revendication 4 ou 13, dans lequel le profil comprend au moins un paramètre pour l'ajustement de la reconnaissance de syntaxe lors de la reconnaissance d'une suite de mots comme deuxième section de reconnaissance acoustique (42) de l'environnement de reconnaissance (4).

16. Procédé selon la revendication 4 ou 15, dans lequel un profil possède au moins un paramètre pour influencer une analyse sémantique (43) comme troisième section de reconnaissance acoustique dans l'environnement de reconnaissance (4).

17. Procédé selon la revendication 4, dans lequel un profil possède au moins un paramètre pour modifier une commande de dialogue (44) dans l'environnement de reconnaissance (4).

18. Procédé selon la revendication 4 ou 17, dans lequel, par le biais de l'émission d'un dialogue (44,51) comme signalisation acoustique ou optique, on prépare ou on engage un changement du profil chargé dans l'environnement de reconnaissance (4).

19. Procédé selon la revendication 4, dans lequel les profils mémorisés (Pᵢ) sont des profils individuels, en particulier individualisés.

20. Procédé selon la revendication 4, dans lequel, lors de la réalisation du traitement de la parole dans l'environnement de reconnaissance (4), simultanément des mots clés pour commander l'appareil technique (52) et des mots de recherche pour déterminer des informations pré-mémorisées, telles que des numéros de téléphone, des reconnaissances d'utilisateur, sont comparés au signal audio (sₐ), sans que les signaux vocaux ne soient répartis en une section temporelle pour la reconnaissance de mots de recherche et en une deuxième section temporelle pour la reconnaissance de mots clés.

21. Procédé selon la revendication 6, dans lequel la modification du profil standard (Pₓ) en un profil individuel se fait pendant la durée de l'intégration dans l'environnement de reconnaissance (4), le profil standard mémorisé restant inchangé hors de l'environnement de reconnaissance, tandis que l'individualisation du profil standard chargé se fait :
- en modifiant, en particulier en réduisant le vocabulaire prédéterminé par le profil ;
- en modifiant les paramètres de la propriété de l'émission d'un dialogue (44, 51) optique ou acoustique ; et
- en modifiant une quantité de suites de mots, admise pour la reconnaissance, du vocabulaire prédéterminé par le profil ou du vocabulaire réduit.

22. Procédé selon la revendication 4, dans lequel un profil (Pᵢ) comprend des paramètres pour au moins un modèle acoustique (41) sous la forme de caractéristiques d'adaptation du au moins un modèle à des caractéristiques spécifiques au larynx du locuteur qui produit le signal audio (propriété vocale) pour le chargement (8a) dans une section de reconnaissance (41) acoustique de l'environnement de reconnaissance (4).

23. Procédé selon la revendication 4, dans lequel la reconnaissance de suites de mots (42) est limitée, en particulier par réduction du nombre de mots utilisables ou par limitation des suites de mots admises pour la reconnaissance.

24. Procédé selon la revendication 23, dans lequel la limitation se fait après émission d'un signal (51,51a) pour la signalisation optique ou acoustique à un utilisateur.

25. Procédé selon la revendication 4, dans lequel, lors du test d'authentification (2) via une deuxième base de données (31*), un utilisateur est affecté à un profil individuel de la première base de données (32).

26. Procédé selon la revendication 25, dans lequel la deuxième base de données (31*) comprend des entrées qui peuvent être modifiées ou complétées lorsqu'un nouveau profil individuel est créé dans l'environnement de reconnaissance (4) et est mémorisé dans la première base de données (32).

27. Procédé selon la revendication 4 ou 22, dans lequel, pour améliorer la reconnaissance dans l'environnement de reconnaissance (4), on effectue dans un modèle acoustique (41) une adaptation à un type de transmission ou à un type d'enregistrement du signal audio courant (sₐ) .

28. Procédé selon la revendication 4, dans lequel la reconnaissance de suites de mots (42) effectue, après reconnaissance d'un mot, pour le mot suivant à reconnaître, une limitation des mots disponibles, qui ont été affectés ou prédéterminés par le profil.

29. Procédé selon la revendication 28, dans lequel le signal audio est mémorisé dans une chaîne reconnue de mots.

30. Procédé selon la revendication 4, dans lequel, avant de sélectionner ou d'affecter un profil mémorisé, on élabore comme possibilités de sélection un nombre réduit de profils probables, qui se trouvent dans le cadre des profils mémorisés, pour disposer d'une sélection préalable de profils - probablement à affecter - comme plage limitée de sélection et sélectionner à partir de cette dernière un profil le mieux adapté au signal audio et le charger (33) dans le premier ou le deuxième environnement de reconnaissance (4) .

31. Procédé selon la revendication 4, dans lequel le profil sélectionné et intégré (33) comprend au moins un HMM (Hidden Markov Modell, modèle de Markov caché) ou un modèle vocal pour un modèle acoustique (41) comme première section de reconnaissance dans l'environnement de reconnaissance (4).

32. Procédé selon la revendication 4, dans lequel, en fonction du profil sélectionné et chargé (33), on admettra plus ou moins de mots clés ou plus ou moins d'entrées d'informations (informations mémorisées) ou on pourra les sélectionner par commande via le signal audio pour faire en sorte que la profondeur de la commande de l'appareil technique (52) dépende du signal audio courant et, par conséquent, du locuteur authentifié.
